(19) Europäisches Patentamt
European Patent Office
Office européen des brevets

(11) EP 1 067 170 B1

(12) **EUROPÄISCHE PATENTSCHRIFT**

(45) Veröffentlichungstag und Bekanntmachung des Hinweises auf die Patenterteilung:
**13.09.2006 Patentblatt 2006/37**

(51) Int Cl.:
***C10M 173/00*** *(2006.01)* ***C10M 151/02*** *(2006.01)*
*C10M 173/00* *(2006.01)* *C10M 151/02* *(2006.01)*

(21) Anmeldenummer: **00113203.4**

(22) Anmeldetag: **21.06.2000**

(54) **Verwendung von Polymeren als Anti-Nebel-Additiv in wasserbasierenden Kühlschmierstoffen**

Use of polymers as anti-misting additive in waterbased coolant lubricants

Utilisation de polymères comme additifs anti-embruns dans les lubrifiants aqueux de refroidissement

(84) Benannte Vertragsstaaten:
**BE DE ES FR GB IT**

(30) Priorität: **06.07.1999 DE 19931218**

(43) Veröffentlichungstag der Anmeldung:
**10.01.2001 Patentblatt 2001/02**

(73) Patentinhaber: **Clariant Produkte (Deutschland) GmbH**
**65929 Frankfurt am Main (DE)**

(72) Erfinder:
- **Kupfer, Rainer, Dr.**
**65795 Hattersheim (DE)**
- **Heier, Karl Heinz, Dr.**
**60598 Frankfurt/Main (DE)**

(56) Entgegenhaltungen:
**EP-A- 0 483 638**
**GB-A- 2 252 103**
**US-A- 4 536 539**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 067 170 B1

Printed by Jouve, 75001 PARIS (FR)

## Beschreibung

Die vorliegende Erfindung betrifft die Verwendung von Polymeren, welche Struktureinheiten von zweifach olefinisch ungesättigten Ammoniumkationen und von Acrylamidosulfonsäuren enthalten, zur Unterdrückung der Nebelbildung von wasserbasierenden Kühlschmierstoffen.

Bei der Metallbearbeitung werden zur Verminderung der Abnutzung von Werkzeugen im allgemeinen Kühlschmiermittel eingesetzt. Diese können bei den beispielsweise beim Schneiden oder Schleifen von Metallen auftretenden hohen Geschwindigkeiten von Werkzeug oder Werkstück in die Umgebung verwirbelt werden, wodurch eine unerwünschte Nebelbildung eintritt. Der Stand der Technik kennt verschiedene Ansätze, diese Nebelbildung zu vermindern (antimisting).

EP-A-0 811 677 offenbart wasserbasierende Metallbearbeitungsflüssigkeiten, die antimisting-wirksame Copolymere enthalten. Diese Copolymere bestehen einerseits aus Struktureinheiten, die entweder von Acrylamidosulfonsäuren oder von sulfoniertem Styrol abgeleitet sind, andererseits aus Struktureinheiten aus Acrylamiden oder Acrylestern.

EP-B-0 642 571 offenbart die Verwendung von Polymeren mit einem Molekulargewicht über 1.000.000 Einheiten als antimisting-Additiv, wobei die Polymeren aus der Gruppe der Polyalkylenoxide, Polyacrylamide, Polymethacrylamide oder Acrylamid/Methacrylamid/ungesättigte Carbonsäure-Copolymere ausgewählt sind.

GB-A-22 52 103 offenbart Polymere als antimisting-Additiv, die aus Struktureinheiten aufgebaut sind, welche sich von wasserlöslichen Acrylamiden, Acrylsäure und wasserunlöslichen Acrylamiden ableiten.

EP-A-0 483 638 offenbart ein wasserlösliches Mischpolymerisat, das zu 5 bis 90 Gew.-% aus Gruppen der Formel

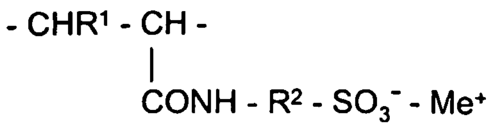

I

worin $R^1$ Wasserstoff oder Methyl, $R^2$ $C_2$-$C_{10}$-Alkylen, und Me Ammonium oder ein Alkalimetall bedeutet, zu 5-90 Gew.-% aus Gruppen der Formel

$$-CH{=}CH{-}CH_2{-}N^{+}R^3R^4{-}CH_2{-}CH{=}CH{-}X^{-} \qquad II$$

worin X ein Halogen, $R^3$ und $R^4$ unabhängig voneinander $C_1$-$C_6$-Alkyl, bedeuten, zu 0-60 Gew.-% aus Gruppen der Formel

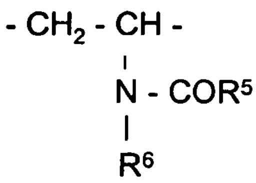

III

in der $R^5$ und $R^6$ zusammen eine Propylengruppe, die unter Einschluss des Restes

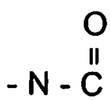

einen Pyrrolidonrest bildet, bedeutet, und zu 0-30 Gew.-% aus Gruppen der Formel

$$-CHR^7{-}CHR^8{-} \qquad IV$$

worin $R^7$ Wasserstoff oder Methyl und $R^8$ $CONH_2$, $CON(CH_3)_2$, Cyano, $SO_3H$, $SO_3Me$, $C_6H_4SO_3H$, $C_6H_4SO_3Me$, $CH_2SO_3H$, $CH_2SO_3Me$, COOH, COOMe oder Carboxy-$C_1$-$C_{15}$-alkyl bedeutet, wobei Me ein Ammonium- oder ein AlkalimetallKation bedeutet und die Reihenfolge der Komponenten I bis IV beliebig sein kann, besteht.

Das Mischpolymerisat findet Verwendung als wasserbindendes Additiv für Feststoffsuspensionen, vorzugsweise für Zementschlämme, Gipsschlämme, Mörtel, Bohrspülungen oder Pigmentsuspensionen, oder als wasserbindendes Additiv für wässrige Salzlösungen.

US-4 536 539 offenbart ein Mittel zur Viskositätsveränderung, enthaltend einen Polymerkomplex in einer wässrigen Lösung, gekennzeichnet durch eine Mischung aus:

(a) einem Copolymer aus einem ersten wasserlöslichen Polymergerüst und einem anionischen Comonomer, das 1 bis 50 % der ionischen Komponente enthält, und

(b) einem Copolymer aus einem zweiten wasserlöslichen Polymergerüst und einem kationischen Comonomer, das 1 bis 50 % der ionischen Komponente enthält, wobei das Verhältnis von anionischer zu kationischer Komponente im Bereich von 45 : 1 bis 1 : 45 liegt.

Additive zur Verminderung der Nebelbildung in der Metallbearbeitung stellen schon aus Gründen des Gesundheitsschutzes, der mit solchen Arbeiten betrauten Personen, ein wichtiges Hilfsmittel dar. Solche Additive sind daher Gegenstand intensiver Forschungs- und Entwicklungsarbeiten. Der vorliegenden Erfindung liegt die Aufgabe zugrunde, Additive mit verbesserten Eigenschaften bereitzustellen.

Überraschenderweise wurde gefunden, daß Polymere auf Basis von zweifach olefinisch ungesättigten Ammoniumionen und Acrylamidosulfonsäuren sehr wirksame Nebelverhinderer sind.

Gegenstand der Erfindung ist die Verwendung von Copolymeren, bestehend aus 20 bis 35 Gew.-% Struktureinheiten der Formel 1

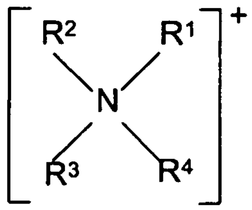

**(1)**

65 bis 80 Gew.-% Struktureinheiten der Formel 2

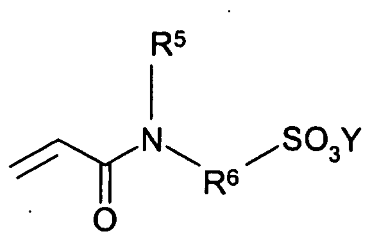

**(2)**

und gegebenenfalls 5 bis 20 Gew.-% von Acrylsäure abgeleitete Struktureinheiten und/oder 5 bis 25 Gew.-% Struktureinheiten abgeleitet aus Verbindungen der Formel (4),

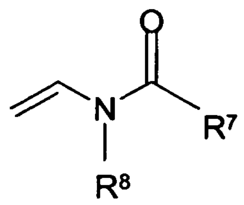

(4)

oder der Formel 4b

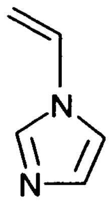

(4b)

worin

| | |
|---|---|
| $R^1$ und $R^2$ | unabhängig voneinander einen endständig ungesättigten Alkenylrest mit 3 bis 5 C-Atomen, |
| $R^3$ und $R^4$ | unabhängig voneinander $C_1$-$C_4$-Alkyl |
| $R^5$ | H oder $C_1$-$C_4$-Alkyl |
| $R^6$ | einen verzweigten oder unverzweigten $C_1$-$C_6$-Alkylenrest |
| $R^7$ und $R^8$ | unabhängig voneinander H oder $C_1$-$C_4$-Alkyl, oder unter Einschluß der -N- CO- Gruppe einen Ring mit 5, 6, 7 oder 8 Ringatomen bilden |
| X | ein Anion |
| Y | ein Alkalimetall bedeuten, |

zur Verhinderung der Nebelbildung in wasserbasierenden Kühlschmierstoffen in Mengen von 0,01 bis 2 Gew.-%.

Das so definierte Copolymer wird im folgenden auch als antimisting-Additiv bezeichnet.

Der Begriff "abgeleitet aus" bedeutet hier, daß die angegebenen olefinisch ungesättigten Verbindungen unter Verlust wenigstens einer C-C-Doppelbindung abreagieren und das Copolymer somit entsprechende Struktureinheiten enthält.

$R^1$ und $R^2$ bedeuten vorzugsweise beide einen Allylrest. $R^3$ und $R^4$ stehen vorzugsweise beide für einen Methylrest. $R^5$ steht vorzugsweise für Wasserstoff. $R^6$ steht in einer bevorzugten Ausführungsform für einen Alkylenrest der Formel 3.

$$-C(CH_3)_2-CH_2- \quad (3)$$

Die Struktureinheit der Formel 1 wird vorzugsweise durch die Copolymerisation von Diallyldimethylammoniumchlorid (DADMAC) dargestellt. Die Struktureinheit der Formel 2 wird vorzugsweise durch die Copolymerisation von Acrylamidopropenylsulfonsäure (AMPS) dargestellt.

Mögliche Anionen X sind solche, die die Polymerisation nicht störend beeinflussen. Beispiele von Anionen sind Halogenide, Sulfate, Nitrate, Carbonate und Phosphate.

Bevorzugte Molekulargewichte (Zahlenmittel) der Copolymeren liegen zwischen 100.000 und 2.000.000, insbesondere 250.000 bis 1.000.000 Einheiten.

Als Indikator für das Molekulargewicht dienen die relative Viskosität bzw. der k-Wert. Zur Bestimmung des k-Werts wird das Copolymer in einer bestimmten Konzentration (meist 0,5 %) gelöst und mittels Ubbelohde-Kapillar-Viskosimeter die Ausflußzeit bei 25°C ermittelt. Dieser Wert ergibt die absolute Viskosität der Lösung ($\eta_c$). Die absolute Viskosität des Lösemittels ist $\eta_o$. Das Verhältnis beider absoluten Viskositäten ergibt die relative Viskosität

$$z = \frac{\eta_c}{\eta_o}$$

aus den relativen Viskositäten der Funktion der Konzentration kann der k-Wert mittels folgender Gleichung ermittelt werden:

$$\mathrm{Lg}\ z = \left( \frac{75 \cdot k^2}{1 + 1.5\ kc} + k \right) c$$

Die molaren Mengen der Struktureinheiten der Formeln 1 und 2 ergänzen sich in einer bevorzugten Ausführungsform zu 100 Gew.-%.

Das Copolymer kann in einer weiteren bevorzugten Ausführungsform weitere Comonomere enthalten. In einer solchen weiteren bevorzugten Ausführungsform enthält das Copolymer Struktureinheiten, die von Verbindungen der Formel 4 abgeleitet ist,

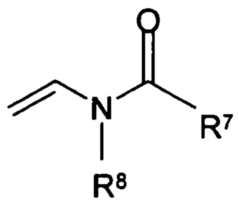

(4)

In Formel (4) bedeuten $R^7$ und $R^8$ H oder $C_1$-$C_4$-Alkyl. Weiterhin können $R^7$ und $R^8$ unter Einschluß der -N-CO-Gruppe einen Ring mit 5, 6, 7 oder 8 Ringatomen bilden. Bevorzugt sind Ringe mit 5, 6 oder 7 Ringatomen. $R^7$ und $R^8$ können Heteroatome umfassen, vorzugsweise umfassen sie nur Kohlenstoffatome. In einer besonders bevorzugten Ausführungsform steht Formel 4 für eine Struktureinheit der Formel 4a.

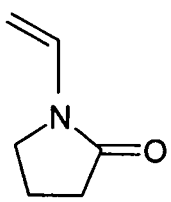

(4a)

In einer weiteren besonders bevorzugten Ausführungsform steht Formel 4 für N-Vinylcaprolactam. In einer weiteren besonders bevorzugten Ausführungsform handelt es sich um eine Struktureinheit der Formel 4b.

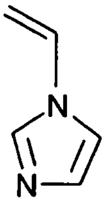

(4b)

Der Anteil von Struktureinheiten der Formel (4) am Copolymeren liegt unabhängig voneinander bei bis zu 25 Gew.-%, vorzugsweise unabhängig voneinander bei 5 bis 25 Gew.-%.

In einer weiteren bevorzugten Ausführungsform enthält das Copolymer 5 bis 20 Gew.-% Struktureinheiten, die sich von der Acrylsäure ableiten.

Die erfindungsgemäß verwendeten Copolymere sind durch Copolymerisation von Verbindungen der Formeln (1) und (2) und gegebenenfalls (4) oder (4b) herstellbar. Das Verfahren zur Herstellung der Copolymeren ist im Stand der Technik beschrieben und wird im Folgenden dargelegt.

Die Copolymere können nach den Verfahren der Lösungspolymerisation, Substanzpolymerisation, Emulsionspolymerisation, inversen Emulsionspolymerisation, Fällungspolymerisation oder Gelpolymerisation hergestellt werden. Vorzugsweise wird die Polymerisation als Lösungspolymerisation in Wasser oder als Fällungspolymerisation ausgeführt.

Bei der Durchführung der Copolymerisation in einem mit Wasser mischbaren organischen Lösungsmittel arbeitet man im Allgemeinen unter den Bedingungen der Fällungspolymerisation. Hierbei fällt das Polymerisat direkt in fester Form an und kann durch Abdestillieren des Lösungsmittels oder Absaugen und Trocknen isoliert werden.

Als wassermischbare organische Lösungsmittel, die zur Durchführung dieses Herstellungsverfahrens geeignet sind, kommen insbesondere wasserlösliche Alkanole, nämlich solche mit 1 bis 4 C-Atomen wie Methanol, Ethanol, Propanol, Isopropanol, n-, sec- und iso-Butanol, vorzugweise aber tert.-Butanol, in Betracht.

Der Wassergehalt der hierbei als Lösungsmittel eingesetzten niederen Alkanole sollte 6 Gew.-% nicht überschreiten, da sonst Klumpenbildung bei der Polymerisation auftreten kann. Vorzugweise wird bei einem Wassergehalt von 0 bis 3 Gew.-% gearbeitet.

Die Menge des einzusetzenden Lösungsmittels richtet sich bis zu einem gewissen Grad nach der Art der eingesetzten Comonomeren. In der Regel werden pro 100 g Gesamtmonomere 200 bis 1.000 g des Lösungsmittels eingesetzt.

Bei der Durchführung der Polymerisation in umgekehrter Emulsion wird die wäßrige Monomerenlösung in bekannter Weise in einem mit Wasser nicht mischbaren organischen Lösungsmittel wie Cyclohexan, Toluol, Xylol, Heptan oder hochsiedenden Benzinfraktionen unter Zusatz von 0,5 bis 8 Gew.-%, vorzugweise 1 bis 4 Gew.-%, bekannter Emulgatoren vom W/O-Typ emulgiert und mit üblichen radikalbildenden Initiatoren polymerisiert.

Das Prinzip der inversen Emulsionspolymerisation ist aus US-3,284,393 bekannt. Bei diesem Verfahren werden wasserlösliche Monomere oder Mischungen davon in der Wärme zu hochmolekularen Copolymerisaten polymerisiert, indem man zunächst die Monomere oder wäßrige Lösungen davon, unter Zusatz von Wasser-in-Öl-Emulgatoren in einem mit Wasser nicht mischbaren, die zusammenhängende Phase bildenden organischen Lösungsmittel emulgiert und diese Emulsion in Gegenwart von radikalischen Initiatoren erwärmt. Die einzusetzenden Comonomere können als solche in dem mit Wasser nicht mischbaren organischen Lösungsmittel emulgiert werden, oder sie können in Form einer wäßrigen Lösung, die zwischen 100 und 5 Gew.-% Comonomere und 0 bis 95 Gew.-% Wasser enthält, eingesetzt werden, wobei die Zusammensetzung der wäßrigen Lösung eine Frage der Löslichkeit der Comonomere in Wasser und der vorgesehenen Polymerisationstemperatur ist. Das Verhältnis zwischen Wasser und der Monomerenphase ist in weiten Grenzen variabel und liegt in der Regel bei 70:30 bis 30:70.

Um die Monomeren in dem mit Wasser nicht mischbaren organischen Lösungsmittel zu einer Wasser-in-Öl-Emulsion zu emulgieren, werden den Gemischen 0,1 bis 10 Gew.-%, bezogen auf die Ölphase, eines Wasser-in-Öl-Emulgators zugesetzt. Vorzugsweise werden solche Emulgatoren verwendet, die einen relativ niedrigen HLB-Wert aufweisen. Der HLB-Wert ist ein Maß der Hydrophobie und Hydrophilie von Tensiden und Emulgatoren (Griffin, J. Soc. Cosmetic Chemists 1, (1950), 311). Substanzen mit niedrigem HLB-Wert, etwa unter 10, sind im allgemeinen gute Wasser-in-Öl-Emulgatoren.

Als Ölphase kann im Prinzip jede inerte wasserunlösliche Flüssigkeit, d.h. jedes hydrophobe organische Lösungsmittel, eingesetzt werden. Im allgemeinen verwendet man hier Kohlenwasserstoffe, deren Siedepunkt im Bereich von 120 bis 350 °C liegt. Diese Kohlenwasserstoffe können gesättigte, lineare oder verzweigte Paraffin-Kohlenwasserstoffe sein, wie sie in Erdölfraktionen vorwiegend vorliegen, wobei diese auch die üblichen Anteile von Naphthenkohlenwasserstoffen enthalten können. Es können aber auch aromatische Kohlenwasserstoffe wie beispielsweise Toluol oder Xylol sowie die Gemische der oben genannten Kohlenwasserstoffe als Ölphase eingesetzt werden. Vorzugsweise verwendet man ein Gemisch aus gesättigten Normal- und Iso-Paraffinkohlenwasserstoffen, das bis zu 20 Gew.-%

Naphthene enthält. Eine detaillierte Beschreibung des Verfahrens findet sich beispielsweise in DE-A-1 089 173 und in US-3,284,393 und 3,624,019.

Copolymerisate mit Molekulargewichten von über 1.000.000 werden erhalten, wenn man die Polymerisation in wäßriger Lösung nach dem Verfahren der sogenannten Gelpolymerisation durchführt. Dabei werden 15 - 60 Gew.-%ige Lösungen der Comonomere mit bekannten geeigneten Katalysatoren ohne mechanische Durchmischung unter Ausnutzung des Trommsdorff-Norrish-Effekts (Bios Final Rep. 363,22; Macromol. Chem. 1, 169/1947) polymerisiert.

Die auf diesem Wege hergestellten, in Form wäßriger Gallerten vorliegenden Copolymerisate können nach mechanischer Zerkleinerung mit geeigneten Apparaten direkt in Wasser gelöst werden und zum Einsatz gelangen. Sie können aber auch nach Entfernung des Wassers durch bekannte Trocknungsprozesse in fester Form erhalten und erst bei ihrer Verwendung wieder in Wasser aufgelöst werden.

Die Polymerisationsreaktionen werden im Temperaturbereich zwischen -60 und 200°C, bevorzugt zwischen 10 und 120°C, durchgeführt, wobei sowohl unter Normaldruck als auch unter erhöhtem Druck gearbeitet werden kann. In der Regel wird die Polymerisation in einer Schutzgasatmosphäre, vorzugsweise unter Stickstoff ausgeführt.

Zur Auslösung der Polymerisation können energiereiche elektromagnetische oder korpuskulare Strahlen oder die üblichen chemischen Polymerisationsinitiatoren herangezogen werden, z.B. organische Peroxide wie Benzoylperoxid, tert. Butylhydroperoxid, Methylethylketonperoxid, Cumolhydroperoxid, Azoverbindungen wie Azodiisobutyronitril oder 2'-Azo-bis-(2-amidinopropan)-dihydrochlorid sowie anorganische Peroxiverbindungen wie $(NH_4)_2S_2O_8$ oder $K_2S_2O_8$ oder $H_2O_2$ ggf. in Kombination mit Reduktionsmitteln wie Natriumhydrogensulfit und Eisen-II-Sulfat oder Redoxsysteme, welche als reduzierende Komponente eine aliphatische oder aromatische Sulfinsäure wie Benzolsulfinsäure und Toluolsulfinsäure oder Derivate dieser Säuren, wie z. B. Mannichaddukte aus Sulfinsäure, Aldehyden und AminoVerbindungen, wie sich in DE-C-13 01 566 beschrieben sind, enthalten. Pro 100 g Gesamtmonomere werden in der Regel 0,03 bis 2 g des Polymerisationsinitiators eingesetzt.

Den Polymerisationsansätzen werden gegebenenfalls kleine Mengen von sogenannten Moderatoren zugesetzt, die den Verlauf der Reaktion dadurch harmonisieren, daß sie das Reaktionsgeschwindigkeits-Zeitdiagramm abflachen. Sie führen damit zu einer Verbesserung der Reproduzierbarkeit der Reaktion und ermöglichen damit, einheitliche Produkte mit enger Molmassenverteilung und hoher Kettenlänge herzustellen. Beispiele für geeignete Moderatoren dieses Typs sind Nitrilo-tris-propionylamid oder Monoalkylamine, Dialkylamine oder Trialkylamine wie z.B. Dibutylamin. Auch bei der Herstellung der erfindungsgemäßen Copolymerisate können solche Moderatoren mit Vorteil verwendet werden. Weiterhin können den Polymerisationsansätzen sogenannte Regulatoren zugesetzt werden, die das Molekulargewicht der hergestellten Polymerisate durch einen gezielten Kettenabbruch einstellen. Brauchbare bekannte Regulatoren sind z.B. Alkohole wie Methanol, Ethanol, Propanol, Isopropanol, n-Butanol und Amylalkohole, Alkylmercaptane wie z. B. Dodecylmercaptan und tert. Dodecylmercaptan, Isooctylthioglycolat und einige Halogenverbindungen wie z.B. Tetrachlorkohlenstoff, Chloroform und Methylenchlorid.

Die Copolymere werden wasserbasierenden Kühlschmiermitteln in Mengen von 0,01 bis 2, vorzugsweise 0,05 bis 0,5 Gew.-%, bezogen auf das fertig formulierte Kühlschmiermittel, zugesetzt.

Die Zusammensetzung der wasserbasierenden Kühlschmierstoffe kann sehr unterschiedlich sein. So enthalten solche Kühlschmierstoffe häufig natürliche paraffinische, naphthenische oder paraffinisch-naphthenische Mineralöle neben weiteren Zusätzen. Ferner können solche Kühlschmierstoffe aus Esterölen, Fettöl-Derivaten, synthetischen Kohlenwasserstoffen, Poly-$\alpha$-Olefinen wie z.B. Polyisobutenen oder Polybutenen, Polypropylenglykol, Trimethylolpropanester, Neopentylglykolester, Pentaerythritester, Di-(2-ethylhexyl)sebacat, Di-(2-ethylhexyl)adipat, Dibutylphthalat und/oder Estern von Phosphor enthaltenden Säuren bestehen.

Eine weitere Ausführungsform von Kühlschmierstoffen sind wäßrige Lösungen von anorganischen Salzen wie Phosphaten, Boraten, Carbonaten und organischen Rostschutzmitteln wie Aminen, Alkanolaminen und substituierten Alkanolaminen, sowie ihren Umsetzungsprodukten mit anorganischen und organischen Säuren. Solche Säuren umfassen beispielsweise natürliche oder synthetische Carbonsäuren wie Caprylsäure, Ethylhexansäure, Caprinsäure, 2,2,4-Trimethylhexansäure, Benzoesäure, substituierte Benzoesäuren, Dicarbonsäuren mit 6 - 22 C-Atomen, Phosphorsäureester, Bicarbonsäurehalbester oder Dicarbonsäurehalbamide, Zitronensäure, Gluconsäure, Kohlensäure, Phosphorsäure, Polyphosphorsäuren, Borsäure. Weiterhin enthalten Kühlschmierstoffe häufig wasserlösliche Schmierstoffe wie Glykole und Polyglykole sowie Ether oder Ester von Polyglykolen und weitere Zusätze zur Einstellung der erwünschten Eigenschaften.

Wasserbasierende Kühlschmiermittel sind in der deutschen Norm DIN 51385 beschrieben. Auf diese Norm wird hiermit bezug genommen.

Zu diesen Grundmaterialien, die den überwiegenden Anteil der Kühlschmiermittel ausmachen, können weitere funktionelle Zusatzstoffe kommen, wie beispielsweise Zusätze zur Verbesserung der Schmierfähigkeit, Antiverschleißmittel, Korrosionsinhibitoren, Antioxidantien, anionische oder nichtionische Emulgatoren, Lösungsvermittler, Antischaummittel, Biozide und/oder Tenside.

Zur Herstellung eines verwendungsfähigen wasserbasierenden Kühlschmiermittels werden die genannten Grundstoffe, die hier definierten Copolymere und ggf. funktionelle Zusatzstoffe mit Wasser vermischt.

In bevorzugten Ausführungsformen enthalten die Kühlschmiermittel:

1. 0,1 - 2 Gew.-% einer Verbindung der Formel (6)

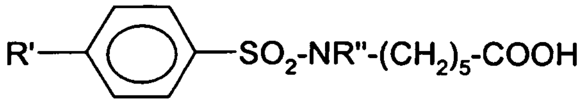

(6)

mit R', R" = H oder $CH_3$
neutralisiert mit einem kurzkettigen Alkanolamin wie beispielsweise Triethanolamin, 0,01 - 2 Gew.-% des erfindungsgemäßen Copolymeren sowie Wasser ad 100 Gew.-%;
oder

2. 0,1 bis 2 Gew.-% einer Verbindung der Formel (7)

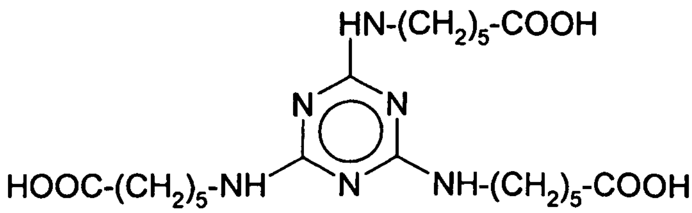

(7)

neutralisiert mit einem kurzkettigen Alkanolamin, 0,01 bis 2 Gew.-% des erfindungsgemäßen Copolymeren und Wasser ad 100 Gew.-%;
oder

3. 0,1 bis 2 Gew.-% einer Verbindung der Formel (8)

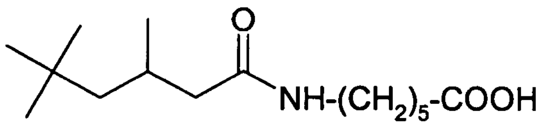

(8)

neutralisiert mit einem kurzkettigen Alkanolamin, 0,01 bis 2 Gew.-% der erfindungsgemäßen Copolymere sowie Wasser ad 100 Gew.-%.

Zu den Zusammensetzungen 1., 2. und 3. kann noch ein Polyalkylenglykol in einer Menge von 5 bis 20 Gew.-% hinzukommen. Dabei handelt es sich um ein EO/PO-Block- oder Mischpolymerisat, welches Schmiereigenschaften aufweist.

Beispiele

Im Folgenden wird die Wirksamkeit der erfindungsgemäß verwendeten Copolymere zur Verhinderung der Nebelbildung von wäßrigen Kühlschmiermitteln beispielhaft belegt.

Zur Bestimmung dieser Wirksamkeit wird eine eigens dafür konstruierte Vorrichtung verwendet. Die Vorrichtung umfaßt einen Behälter mit einer Höhe von 15 cm und einem Durchmesser von 9 cm. In diesen Behälter wird das zu prüfende Kühlschmiermittel eingefüllt. Von außen wird über eine Leitung, die in einer Fritte endet, ein Gasstrom (im allgemeinen Luft) in das Kühlschmiermittel eingeblasen. Die Stärke des Gasstroms wird mittels eines Durchflußmessers

kontrolliert. Die Fritte, über die der Gasstrom in den Behälter eingeblasen wird, befindet sich ca. 1 cm über dem Behälterboden. 1 cm über der Fritte befindet sich ein Dispergator (Ultra Turrax T 25). Strömt Gas über die Fritte in das Kühlschmiermittel, so entsteht bei eingeschaltetem Dispergator über der Flüssigkeitsoberfläche ein Nebel von Kühlschmiermittel. Das Vorhandensein dieses Nebels wird durch 2 Halogenstrahler sichtbar gemacht, deren Lichtstrahlen so über der Flüssigkeitsoberfläche verlaufen, daß eine Beobachtung der durch den Nebel verursachten Streuung möglich ist.

Bei der Durchführung der Versuche wurde ein nicht additiviertes Kühlschmiermittel in den Behälter eingefüllt, und die Nebelbildung beobachtet. Sodann wurde das erfindungsgemäße Copolymer als 5 %ige wäßrige Lösung zugegeben, bis die Nebelbildung nicht mehr zu beobachten war. Der Verbrauch an Copolymeren bis zum Verschwinden der Nebelbildung ist der angegebene Meßwert.

Es werden Kühlschmierkonzentrate folgender Zusammensetzung verwendet (Angaben in Gew.-%):

Kühlschmierkonzentrat K1

| | |
|---|---|
| 6 % | Genapol® 0-050 ($C_{16}$/$C_{18}$-Fettalkoholpolyglykolether mit 5 EO) |
| 49,5 % | Hostacor® 4154 (Alkenylbernsteinsäurederivat) |
| 3 % | Tallölfettsäure |
| 37 % | Shell Gravex® (Mineralöl) |
| 4 % | VE-Wasser |
| 0,5 % | Foam Ban® MS 455-3A (Polyglykol-Siloxan-Entschäumer) |

Kühlschmierkonzentrat K2

| | |
|---|---|
| 30 % | Hostacor® IT (Verbindung der Formel (8) neutralisiert mit Triethanolamin) |
| 17 % | Triethanolamin |
| 1 % | Genapol® PF 10 (EO-PO-Blockpolymer) |
| 4 % | Butyldiglykol |
| 48 % | VE-Wasser |

Kühlschmierkonzentrat K3

| | |
|---|---|
| 45 % | Hostacor® IT |
| 17 % | Triethanolamin |
| 9 % | Genapol® B (EO-PO-Blockpolymer) |
| 1 % | Genapol® PN 30 (EO-PO-Blockpolymer) |
| 5 % | Butyldiglykol |
| 23 % | VE-Wasser |

Die oben genannten Konzentrate werden 3 %ig in Wasser von 20° dH verwendet.

Zusammensetzung der Copolymere (Gew.-%)

| Copolymer | DADMAC | AMPS | VIMA | NVP | k-Wert |
|---|---|---|---|---|---|
| A1 | 25 | 75 | - | - | 183 |
| A2 | 15 | 65 | 20 | - | 162 |

(fortgesetzt)

| Copolymer | DADMAC | AMPS | VIMA | NVP | k-Wert |
|---|---|---|---|---|---|
| A3 | 15 | 60 | 25 | - | 158 |
| A4 | 30 | 65 | 5 | - | 169 |
| A5 | 15 | 75 | - | 10 | 181 |
| A6 | 15 | 80 | - | 5 | 148 |
| A7 | 60 | 15 | 25 | - | 152 |

Die Bestimmung des k-Wertes erfolgte nach Fikentscher, Cellulosechemie, 13, (1932), 58.

Die erhaltenen Ergebnisse sind in folgender Tabelle angegeben.

Tabelle 1

| Wirksamkeit von Copolymeren, Angaben in Gew.-% Copolymer bezogen auf das Gewicht des Kühlschmiermittels | | | |
|---|---|---|---|
| Wirksamkeit in | | | |
| Additiv | K1 | K2 | K3 |
| A1 | 0,18 | 0,2 | 0,16 |
| A2 | 0,14 | 0,14 | 0,12 |
| A3 | 0,13 | 0,13 | 0,11 |
| A4 | 0,14 | 0,14 | 0,16 |
| A5 | 0,13 | 0,12 | 0,15 |
| A6 | 0,14 | 0,13 | 0,16 |
| A7 | 0,12 | 0,12 | 0,16 |
| V1 | 0,16* | 0,16 | 0,18 |
| V1: Antimisting agent gemäß Example 6 aus EP-A-0 811 677<br>* nach Zugabe der angeführten Menge setzt eine deutliche Reduzierung der Nebelbildung ein, jedoch nicht in dem Maße wie bei den anderen Messungen. Dies kann auch durch Zugabe weiterer Mengen nicht gesenkt werden. | | | |

Abkürzungen:

VIMA N-Vinyl-N-methylacetamid
NVP N-Vinylpyrrolidon

Die erfindungsgemäß verwendeten Copolymere erhöhen die Viskosität der mit ihnen additivierten Kühlschmierstoffe nicht oder nur unwesentlich. Sie haben keinen Einfluß auf deren Schaumneigung, Korrosionsschutzeigenschaften oder Schmierwirkung.

Die Scherstabilität der additivierten Kühlschmierstoffe wurde geprüft, indem diese im Ultraturrax bei 10.000 rpm für ca. 10 min unter Kühlung geschert wurden. Nach der Scherung bleibt der Antimisting-Effekt voll erhalten, was zeigt, daß sich die Polymere unter Scherung nicht zersetzen.

Eine Filtrierung der Kühlschmierstoffe durch ein Seitz-Tiefenfilter K300 60 DMR (Porenweite 5 $\mu$m, Druckfilterpresse) hat auf deren Antimisting-Eigenschaften ebenfalls keinen Einfluß.

Die Additivierung von Kühlschmierstoffen mit den erfindungsgemäß verwendeten Copolymeren kann entweder beim Konzentrat oder beim fertig formulierten Kühlschmierstoff vorgenommen werden. Während der fertig formulierte Kühlschmierstoff immer auf Wasser basiert, kann das Konzentrat auch als ölbasierende Substanz vorliegen, in dem die Copolymere nicht löslich sind. Nur in diesem Fall müssen die erfindungsgemäß verwendeten Copolymere in den bereits wasserverdünnten Kühlschmierstoff eingearbeitet werden.

## Patentansprüche

1. Verwendung von Copolymeren, bestehend aus 20 bis 35 Gew.-% Struktureinheiten der Formel 1

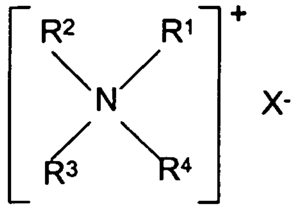

(1)

65 bis 80 Gew.-% Struktureinheiten der Formel 2

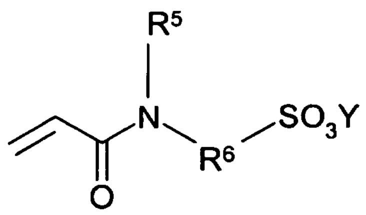

(2)

und gegebenenfalls 5 bis 20 Gew.-% von Acrylsäure abgeleitete Struktureinheiten und/oder 5 bis 25 Gew.-% Struktureinheiten abgeleitet aus Verbindungen der Formel (4),

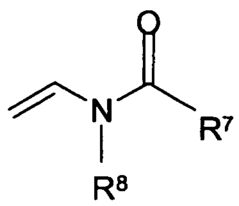

(4)

oder der Formel 4b

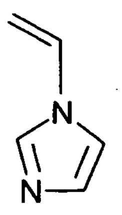

(4b)

worin

$R^1$ und $R^2$ unabhängig voneinander einen endständig ungesättigten Alkenylrest mit 3 bis 5 C-Atomen,
$R^3$ und $R^4$ unabhängig voneinander $C_1$-$C_4$-Alkyl
$R^5$ H oder $C_1$-$C_4$-Alkyl
$R^6$ einen verzweigten oder unverzweigten $C_1$-$C_6$-Alkylenrest
$R^7$ und $R^8$ unabhängig voneinander H oder $C_1$-$C_4$-Alkyl, oder unter Einschluß der -N-CO-Gruppe einen Ring

mit 5, 6, 7 oder 8 Ringatomen bilden
X ein Anion
Y ein Alkalimetall bedeuten,

zur Verhinderung der Nebelbildung in wasserbasierenden Kühlschmierstoffen in Mengen von 0,01 bis 2 Gew.-%.

**2.** Verwendung gemäß Anspruch 1, wobei $R^1$ und $R^2$ für einen Allylrest stehen.

**3.** Verwendung gemäß Anspruch 1 und/oder 2, wobei $R^3$ und $R^4$ für einen Methylrest stehen.

**4.** Verwendung gemäß einem oder mehreren der Ansprüche 1 bis 3, wobei $R^5$ für einen Rest der Formel (3)

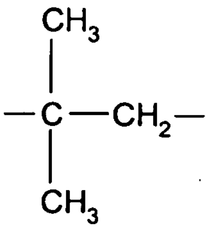

**(3)**

steht.

**5.** Verwendung gemäß einem oder mehreren der Ansprüche 1 bis 4, wobei das Molekulargewicht des Copolymeren zwischen 100.000 und 2.000.000 Einheiten liegt.

**Claims**

**1.** The use of copolymers composed of
20 to 35% by weight of structural units of the formula I

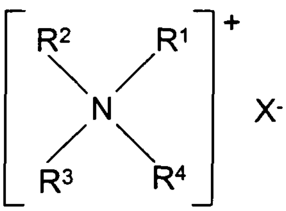

(1)

65 to 80% by weight of structural units of the formula 2

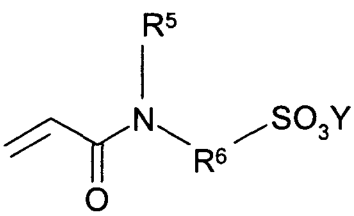

(2)

and, if desired, from 5 to 20% by weight of structural units derived from acrylic acid and/or from 5 to 25% by weight of structural units derived from compounds of the formula (4)

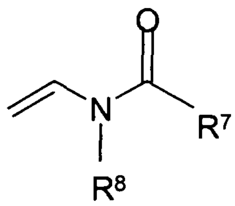

(4)

or of the formula 4b

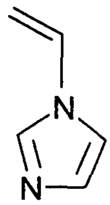

(4b)

in which

$R^1$ and $R^2$ independently of one another are a terminally unsaturated alkenyl radical having 3 to 5 carbon atoms,
$R^3$ and $R^4$ independently of one another are $C_1$-$C_4$ alkyl,
$R^5$ is H or $C_1$-$C_4$ alkyl,
$R^6$ is a branched or unbranched $C_1$-$C_6$ alkylene radical,
$R_7$ and $R_8$ independently of one another are H or $C_1$-$C_4$ alkyl, or with inclusion of the -N-CO- group form a ring having 5, 6, 7 or 8 ring atoms.
X is an anion, and
Y is an alkali metal

to prevent misting in water-based cooling lubricants, in amounts of from 0.01 to 2% by weight.

2. The use as claimed in claim 1, wherein R and $R^2$ are an allyl radical.

3. The use as claimed in claim 1 and/or 2, wherein $R^3$ and $R^4$ are a methyl radical.

4. The use as claimed in one or more of claims 1 to 3, wherein $R^6$ is a radical of the formula (3)

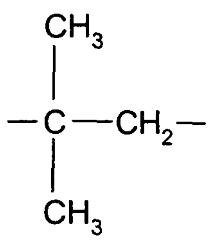

(3)

5. The use as claimed in one or more of claims 1 to 4, wherein the molecular weight of the copolymer is between 100,000 and 2,000,000 units.

**Revendications**

1. Utilisation, pour empêcher la formation d'un brouillard dans des réfrigérants-lubrifiants à base aqueuse, en des

quantités de 0,01 à 2 % en poids, de copolymères constitués
de 20 à 35 % en poids de motifs structuraux de formule 1

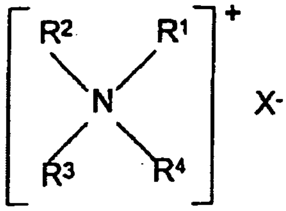

(1)

de 65 à 80 % en poids de motifs structuraux de formule 2

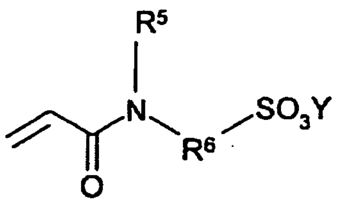

(2)

et éventuellement de 5 à 20 % en poids de motifs structuraux dérivés de l'acide acrylique et/ou de 5 à 25 % en poids de motifs structuraux dérivés de composés de formule (4)

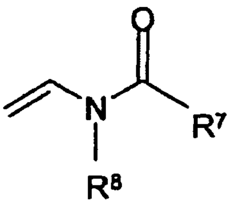

(4)

ou de formule 4b

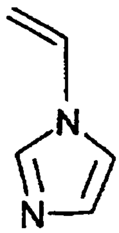

(4b)

dans lesquelles
$R^1$ et $R^2$ représentent chacun indépendamment de l' autre un radical alcényle à insaturation terminale et ayant 3 à 5 atomes de carbone,
$R^3$ et $R^4$ représentent chacun indépendamment de l'autre un groupe alkyle en $C_1$-$C_4$,
$R^5$ est un atome d'hydrogène ou un groupe alkyle en $C_1$-$C_4$,
$R^6$ est un radical alkylène en $C_1$-$C_6$ à chaîne droite ou ramifiée,
$R^7$ et $R^8$ représentent chacun indépendamment de l'autre H ou un groupe alkyle en $C_1$-$C_4$ ou encore, avec incorporation du groupe -N-CO, forment un noyau ayant 5, 6, 7 ou 8 atomes nucléaires,
X est un anion,

Y est un métal alcalin.

2. Utilisation selon la revendication 1, pour laquelle $R^1$ et $R^2$ sont des radicaux allyle.

3. Utilisation selon les revendications 1 et/ou 2, pour laquelle $R^3$ et $R^4$ sont des radicaux méthyle.

4. Utilisation selon l'une ou plusieurs des revendications 1 à 3, pour laquelle $R^6$ est un radical de formule (3).

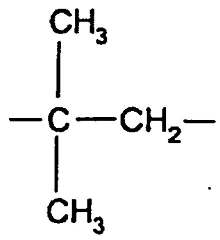

(3)

5. Utilisation selon l'une ou plusieurs des revendications 1 à 4, pour laquelle la masse moléculaire du copolymère est comprise entre 100 000 et 2 000 000 d'unités.